# EUROPEAN PATENT SPECIFICATION

(11) **EP 2 582 174 B1**
(45) Date of publication and mention of the grant of the patent: **10.04.2019**
(21) Application number: 11817701.3
(22) Date of filing: 17.05.2011
(51) Int. Cl.: H04W 72/12, H04W 52/24, H04L 5/00, H04W 92/22, H04W 52/16

(54) **PROCESSING METHOD AND SYSTEM FOR DETERMINING RELATIVE GRANT AND ABSOLUTE GRANT MAPPING**
BEARBEITUNGSVERFAHREN UND SYSTEM ZUR BESTIMMUNG EINER RELATIVEN ZUORDNUNG UND EINER ABSOLUTEN ZUORDNUNG
PROCÉDÉ DE TRAITEMENT ET SYSTÈME POUR DÉTERMINER UN MAPPAGE D'ATTRIBUTION RELATIVE ET UN MAPPAGE D'ATTRIBUTION ABSOLUE

(30) Priority: 17.08.2010 CN 201010258987
(43) Date of publication of application: 17.04.2013
(73) Proprietor: ZTE Corporation, Shenzhen, Guangdong 518057 (CN)
(72) Inventor: KE, Yazhu, Shenzhen Guangdong 518057 (CN); CHENG, Xiang, Shenzhen Guangdong 518057 (CN); LIU, Lin, Shenzhen Guangdong 518057 (CN)
(74) Representative: Garratt, Peter Douglas
(86) International application number: PCT/CN2011/074154
(87) International publication number: WO 2012/022174

(56) References cited:
- WO-A1-2009/079811
- WO-A1-2009/079811
- WO-A1-2009/079812
- WO-A1-2009/079812
- CN-A- 101 060 656
- CN-A- 101 237 437
- HUAWEI: "Addition of 16QAM AG table choice IE", 3GPP DRAFT; R3-082353_16QAM AG TABLE CHOICE_25423CR1403R2, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG3, no. Jeju Island; 20080825, 25 August 2008 (2008-08-25), XP050165387, [retrieved on 2008-08-25]
- "3rd Generation Partnership Project; Technical Specification Group Radio Access Network; UTRAN Iur interface Radio Network Subsystem Application Part (RNSAP) signalling (Release 9)", 3GPP STANDARD; 3GPP TS 25.423, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V9.3.0, 14 June 2010 (2010-06-14), pages 1-1082, XP050441677, [retrieved on 2010-06-14]

## Description

### Technical Field

The present invention relates to technologies of processing relative grant and absolute grant, and more particularly, to a method and system for determining relative grant and absolute grant mapping in a high speed uplink packet access system.

### Background of the Related Art

In a wireless communication system, an Interconnection of Radio Network Subsystem (Iur) interface is an interface via which the radio network subsystem exchanges signaling and data with other radio network subsystems and is an interconnection tie between the radio network subsystems. A Radio Network Subsystem Application Part (RNSAP) protocol layer provides control signaling between radio network controllers.

When a terminal establishes a connection to a radio access network and generates soft handover at the Iur interface, resources of more than two radio network subsystems will be used, and different radio network subsystems play different roles at this point.

A serving radio network subsystem is a radio network subsystem which maintains an interface connection between the terminal and a core network. The serving radio network subsystem is responsible for data transmission between the core network and terminal, and forwarding/receiving of interface signaling to/from the core network; control of radio resources; processing of air interface data at layer 2, and executing basic radio resource management operations, such as handover decision, outer loop power control, and conversion of radio access bearer parameters to air interface transmission channel parameters, etc.

Drift radio network subsystems are other radio network subsystems except the serving radio network subsystem. The drift radio network subsystems control cells used by the terminal, and can implement macro diversity combination, if desired. Unless the terminal uses a common transmission channel, the drift radio network subsystems will not process terminal plane data at layer 2, but only transparently transmit the air interface data to the serving radio network subsystem through routing of the Iur interface. Drift radio network subsystems of one terminal may include one or more than one drift radio network subsystems.

High Speed Uplink Packet Access (HSUPA) is a technology for uplink performance enhancement. The HSUPA increases a data transmission rate in an uplink direction from a terminal to an access network by utilizing power effectively when channel conditions are good. The HSUPA technology continues to use most characteristics of the traditional wireless communication technology, such as cell selection, synchronization, random access and basic mobility management, etc. The key technology of the HSUPA lies in Hybrid Automatic Repeat Request (HARQ), fast scheduling, and a short Transmission Time Interval (TTI) of 2 milliseconds.

The fast scheduling technology is a technology in which the scheduling performed by a radio network controller in a radio network subsystem in a traditional wireless communication system is moved forward to a node B in the radio network subsystem. In each transmission time interval, the terminal reports information such as the amount of data to be sent cached by the terminal currently and current available power of the terminal to the node B by uploading scheduling information. According to a fast scheduling algorithm, that is, according to cell load and cell uplink interference, the amount of data to be sent of the terminal, capability upper limit of the terminal, scheduling policy of the node B itself and current channel quality of the terminal, the node B decides the maximum uplink resources available currently to the terminal (decides the current available maximum transmission rate of the terminal), and informs the terminal of this information by sending scheduling grant. Using such a technology, round-trip delay of scheduling signaling is reduced greatly to ensure that a scheduling response is made rapidly and radio link resources are utilized better, thereby improving system throughput.

If the Iur interface is involved, the scheduling grant is control signaling sent by a drift radio network subsystem to the terminal in a downlink direction for indicating the maximum uplink resources available to the terminal (deciding the current available maximum transmission rate of the terminal). The scheduling grant has following characteristics:
The scheduling grant is only used for an Enhanced Transport Format Combination (E-TFC) selection algorithm.

The scheduling grant controls the maximum Enhanced Dedicated Channel Dedicated Physical Data Channel/Dedicated Physical Control Channel (E-DPDCH/DPCCH) power ratio used in transmitting data in an activated HARQ process. The enhanced dedicated channel is abbreviated as E-DCH, and DPCCH is an abbreviation of the dedicated physical data channel.

There are two types of scheduling grant: absolute grant and relative grant. The absolute grant provides the maximum uplink power resources available to the terminal, and is the maximum allowable E-DPDCH/DPCCH power ratio in each HARQ process. The relative grant, including serving relative grant and non-serving relative grant, indicates that the terminal up-regulates or decreases power resources used in the previous scheduling by a relative value. The serving relative grant specifically includes three values, UP, HOLD and DOWN, and the non-serving relative grant specifically includes two values, HOLD and DOWN.

The drift radio network subsystem sends the absolute grant according to Table 1 which is absolute grant value mapping relationship table one or Table 2 which is absolute grant value mapping relationship table two.

**Table 1**

| Absolute grant value | Index number |
|---|---|
| (168/15)²x6 | 31 |
| (150/15)²x6 | 30 |
| (168/15)²x4 | 29 |
| (150/15)²x4 | 28 |
| (134/15)²x4 | 27 |
| (119/15)²x4 | 26 |
| (150/15)²x2 | 25 |
| (95/15)²x4 | 24 |
| (168/15)² | 23 |
| (150/15)² | 22 |
| (134/15)² | 21 |
| (119/15)² | 20 |
| (106/15)² | 19 |
| (95/15)² | 18 |
| (84/15)² | 17 |
| (75/15)² | 16 |
| (67/15)² | 15 |
| (60/15)² | 14 |
| (53/15)² | 13 |
| (47/15)² | 12 |
| (42/15)² | 11 |
| (38/15)² | 10 |
| (34/15)² | 9 |
| (30/15)² | 8 |
| (27/15)² | 7 |
| (24/15)² | 6 |
| (19/15)² | 5 |
| (15/15)² | 4 |
| (11/15)² | 3 |
| (7/15)² | 2 |
| zero-grant | 1 |
| Non-activated | 0 |

For example, if the drift radio network subsystem decides that the maximum E-DPDCH/DPCCH power ratio of the terminal used in transmitting data in the activated HARQ process is (168/15)²x6 according the fast scheduling algorithm, that is to say, the drift radio network subsystem decides an absolute grant value of (168/15)²x6, then an index number 31 corresponding to the absolute grant value (168/15)²x6 is obtained by searching Table 1. The drift radio network subsystem sends the absolute grant with the index number 31 to the terminal for indicating that the maximum uplink resources available to the terminal (deciding the current available maximum transmission rate of the terminal) is the maximum E-DPDCH/DPCCH power ratio (168/15)²x6 used in transmitting data in the activated HARQ process.

**Table 2**

| Absolute grant value | Index number |
|---|---|
| (377/15)²x4 | 31 |
| (237/15)²x6 | 30 |
| (168/15)²*6 | 29 |
| (150/15)²*6 | 28 |
| (168/15)²*4 | 27 |
| (150/15)²x4 | 26 |
| (134/15)²x4 | 25 |
| (119/15)²x4 | 24 |
| (150/15)²x2 | 23 |
| (95/15)²x4 | 22 |
| (168/15)² | 21 |
| (150/15)² | 20 |
| (134/15)² | 19 |
| (119/15)² | 18 |
| (106/15)² | 17 |
| (95/15)² | 16 |
| (84/15)² | 15 |
| (75/15)² | 14 |
| (67/15)² | 13 |
| (60/15)² | 12 |
| (53/15)² | 11 |
| (47/15)² | 10 |
| (42/15)² | 9 |
| (38/15)² | 8 |
| (34/15)² | 7 |
| (30/15)² | 6 |
| (27/15)² | 5 |
| (24/15)² | 4 |
| (19/15)² | 3 |
| (15/15)² | 2 |
| zero-grant | 1 |
| Non-activated | 0 |

For example, if the drift radio network subsystem decides that the maximum E-DPDCH/DPCCH power ratio of the terminal used in transmitting data in the activated HARQ process is (377/15)²x4 according the fast scheduling algorithm, that is to say, the drift radio network subsystem decides an absolute grant value of (377/15)²x4, then an index number 31 corresponding to the absolute grant value (377/15)²x4 is obtained by searching Table 2. The drift radio network subsystem sends the absolute grant with the index number 31 to the terminal for indicating that the maximum uplink resources available to the terminal (deciding the current available maximum transmission rate of the terminal) is the maximum E-DPDCH/DPCCH power ratio (377/15)²x4 used in transmitting data in the activated HARQ process.

The drift radio network subsystem sends the relative grant according to Table 3 which is scheduling grant table one or Table 4 which is scheduling grant table two.

**Table 3**

| Index number | Scheduling grant |
|---|---|
| 37 | (168/15)²*6 |
| 36 | (150/15)²*6 |
| 35 | (168/15)²*4 |
| 34 | (150/15)²*4 |
| 33 | (134/15)²*4 |
| 32 | (119/15)²*4 |
| 31 | (150/15)²*2 |
| 30 | (95/15)²*4 |
| 29 | (168/15)² |
| 28 | (150/15)² |
| 27 | (134/15)² |
| 26 | (119/15)² |
| 25 | (106/15)² |
| 24 | (95/15)² |
| 23 | (84/15)² |
| 22 | (75/15)² |
| 21 | (67/15)² |
| 20 | (60/15)² |
| 19 | (53/15)² |
| 18 | (47/15)² |
| 17 | (42/15)² |
| 16 | (38/15)² |
| 15 | (34/15)² |
| 14 | (30/15)² |
| 13 | (27/15)² |
| 12 | (24/15)² |
| 11 | (21/15)² |
| 10 | (19/15)² |
| 9 | (17/15)² |
| 8 | (15/15)² |
| 7 | (13/15)² |
| 6 | (12/15)² |
| 5 | (11/15)² |
| 4 | (9/15)² |
| 3 | (8/15)² |
| 2 | (7/15)² |
| 1 | (6/15)² |
| 0 | (5/15)² |

**Table 4**

| Index number | Scheduling grant |
|---|---|
| 37 | (377/15)²x4 |
| 36 | (336/15)²x4 |
| 35 | (237/15)²x6 |
| 34 | (212/15)²x6 |
| 33 | (237/15)²x4 |
| 32 | (168/15)²*6 |
| 31 | (150/15)²*6 |
| 30 | (168/15)²*4 |
| 29 | (150/15)²x4 |
| 28 | (134/15)²x4 |
| 27 | (119/15)²x4 |
| 26 | (150/15)²x2 |
| 25 | (95/15)²x4 |
| 24 | (168/15)² |
| 23 | (150/15)² |
| 22 | (134/15)² |
| 21 | (119/15)² |
| 20 | (106/15)² |
| 19 | (95/15)² |
| 18 | (84/15)² |
| 17 | (75/15)² |
| 16 | (67/15)² |
| 15 | (60/15)² |
| 14 | (53/15)² |
| 13 | (47/15)² |
| 12 | (42/15)² |
| 11 | (38/15)² |
| 10 | (34/15)² |
| 9 | (30/15)² |
| 8 | (27/15)² |
| 7 | (24/15)² |
| 6 | (21/15)² |
| 5 | (19/15)² |
| 4 | (17/15)² |
| 3 | (15/15)² |
| 2 | (13/15)² |
| 1 | (12/15)² |
| 0 | (11/15)² |

The drift radio network subsystem sends the serving relative grant, which specifically includes three values, UP, HOLD and DOWN. The drift radio network subsystem sends the serving relative grant according to the Table 3 or 4, calculates a reference power ratio, calculates a desired scheduling grant value according to the fast scheduling algorithm, compares the desired scheduling grant value with the reference power ratio, determines whether to up-regulate, maintain or decrease the reference power ratio, and then sends control signaling of the corresponding serving relative grant. The reference power ratio is an E-DPDCH/DPCCH power ratio which is used by the previous TTI having the same HARQ process as this data transmission to select an E-TFC.

The drift radio network subsystem sends the non-serving relative grant, which specifically includes two values, HOLD and DOWN. The drift radio network subsystem sends the non-serving relative grant according to Table 3 or 4, calculates a reference record saving power ratio, calculates a desired scheduling grant value according to the fast scheduling algorithm, compares the desired scheduling grant value with the reference record saving power ratio, determining whether to maintain or decrease the reference record saving power ratio, and then sends control signaling of the corresponding non-serving relative grant. The reference record saving power ratio is a new value recorded and saved when an E-DPDCH/DPCCH power ratio which is used by the previous TTI having the same HARQ process as this data transmission to select the E-TFC is updated to be the new value.

Modulation modes used by the HSUPA includes Quadrature Phase Shift Keying (QPSK) and 16 Quadrature Amplitude Modulation (16QAM). The QPSK, which is a digital modulation mode, is divided into absolute phase shift and relative phase shift; and the 16QAM is a digital high order modulation mode in which information amount of each symbol is two times of the QPSK. Compared with the QPSK, the 16QAM can use channel bandwidth more effectively. Moreover, due to the introduction of the 16QAM high order modulation mode, a higher grant value is required to be introduced to satisfy the requirement of higher rate.

In engineering applications, especially in an application scenario of the 16QAM, the following performance problem will occur.

When the drift radio network subsystem activates a 16QAM operation in a radio link, the drift radio network subsystem sends the absolute grant according to Table 1 and sends the relative grant according to Table 4. The resulting problem will be described in detail below.

In the first case, the drift radio network subsystem sends the absolute grant with an index number 2 to the terminal, the absolute grant value corresponding to the index number 2 is (7/15)² according to Table 1. Subsequently, the drift radio network subsystem calculates the desired scheduling grant value according to the fast scheduling algorithm and compares the desired scheduling grant value with the reference power ratio/reference record saving power ratio, and it is desirable to decrease or down-regulate the power ratio, the drift radio network subsystem make reference to Table 4. However, at this point, the minimum granularity is (11/15)² according to Table 4, and (11/15)²>(7/15)², thus it is obvious that the drift radio network subsystem can not inform the terminal to perform a Down operation through the relative grant.

In the second case, the drift radio network subsystem sends the absolute grant with the index number 31 to the terminal, the absolute grant value corresponding to the index number 31 is (168/15)²x6 according to Table 1. Subsequently, the drift radio network subsystem calculates the desired scheduling grant value according to the fast scheduling algorithm and compares the desired scheduling grant value and the reference power ratio/reference record saving power ratio, and it is desirable to up-regulate the power ratio, such as to make full use of 16QAM up to (377/15)²x4. Thus, since the absolute grant value is (168/15)²x6, which is the maximum granularity in Table 1, the drift radio network subsystem can only select to use UP control signaling of the relative grant to inform the terminal to up-regulate the power ratio step by step, but can not use the absolute grant directly. Similarly, if the drift radio network subsystem desires that the absolute grant value be decreased from (377/15)²x4 to (168/15)²x6, the drift radio network subsystem also can only inform the terminal to decrease the power ratio step by step through DOWN control signaling of the relative grant. The processing at each level will at least double processing delay, which has a significant influence on performance, such that the terminal cannot be guaranteed to be responded timely through the fast scheduling, thus the fast scheduling will lose its significance.

The document 3^{rd} Generation Partnership Project (3GPP) DRAFT R3-082353 discloses Radio Link related procedures.

The document 3GPP Technical Specification (TS) 25.423 V9.3.0 discloses radio network layer signaling procedures of the control plane between Radio Network Controllers (RNCs) in Universal Terrestrial Radio Access Network (UTRAN), between RNC in UTRAN and Base Station Subsystem (BSS) in GERAN (Global System Mobile (GSM) Enhanced Data rates for GSM Evolution (EDGE) Radio Access Network) Iu mode and between BSSs in GERAN Iu mode.

The document WO 2009/079811 A1 discloses a method of configuring the absolute grant mapping table for drifting radio network controller.

The document WO 2009/079812 A1 discloses a method for configuring the absolute grant mapping table for base station.

### Summary of the Invention

In view of this, a main object of the present invention is to provide a method and system for determining relative grant and absolute grant mapping so as to process relative grant signaling and absolute grant signaling based on correlation between the relative grant and the absolute grant, thereby solving the above problem.

The present invention provides a method according to claim 1 and a system according to claim 4. Further improvements and embodiments are provided in the dependent claims.

Also provided is a method for determining relative grant and absolute grant mapping comprising:
when a drift radio network subsystem does not activate an uplink 16 Quadrature Amplitude Modulation (16QAM) operation in a radio link, the drift radio network subsystem mapping absolute grant according to a first absolute grant value mapping relationship table, and processing relative grant signaling according to a first scheduling grant table; and
when the drift radio network subsystem activates the uplink 16QAM operation in the radio link, the drift radio network subsystem mapping the absolute grant according to a second absolute grant value mapping relationship table, and processing the relative grant signaling according to a second scheduling grant table.

The method further comprises: a serving radio network subsystem sending Radio Network Subsystem Application Part (RNSAP) layer control signaling to the drift radio network subsystem such that the drift radio network subsystem learns whether to activate the uplink 16QAM operation in the radio link.

When the RNSAP layer control signaling carries an uplink 16QAM operation indication information element and a value of the uplink 16QAM operation indication information element is set to be activated, the drift radio network subsystem learns to activate the uplink 16QAM operation in the radio link;
when the RNSAP layer control signaling carries the uplink 16QAM operation indication information element, and the value of the uplink 16QAM operation indication information element is set to be non-activated, the drift radio network subsystem learns not to activate the uplink 16QAM operation in the radio link; and
when the RNSAP layer control signaling does not carry the uplink 16QAM operation indication information element, the drift radio network subsystem learns not to activate the uplink 16QAM operation in the radio link.

The drift radio network subsystem mapping the absolute grant according to the first absolute grant value mapping relationship table comprises: the drift radio network subsystem searching the first absolute grant value mapping relationship table for an index number corresponding to an absolute grant value; and the drift radio network subsystem sending absolute grant signaling corresponding to the acquired index number to a terminal to indicate the maximum uplink resources available to the terminal;
the drift radio network subsystem processing the relative grant signaling according to the first scheduling grant table comprises: the drift radio network subsystem sending serving relative grant signaling and non-serving relative grant signaling according to the first scheduling grant table.

The drift radio network subsystem mapping the absolute grant according to the second absolute grant value mapping relationship table comprises: the drift radio network subsystem searching the second absolute grant value mapping relationship table for an index number corresponding to an absolute grant value; and the drift radio network subsystem sending absolute grant signaling corresponding to the acquired index number to the terminal to indicate the maximum uplink resources available to the terminal;
the drift radio network subsystem processing the relative grant signaling according to the second scheduling grant table comprises: the drift radio network subsystem sending the serving relative grant signaling and non-serving relative grant signaling according to the second scheduling grant table.

Also provided is a system for determining relative grant and absolute grant mapping comprising a first processing unit at a drift radio network subsystem side and a second processing unit at the drift radio network subsystem side; wherein
the first processing unit is configured to, when a drift radio network subsystem does not activate an uplink 16QAM operation in a radio link, map absolute grant according to a first absolute grant value mapping relationship table, and process relative grant signaling according to a first scheduling grant table; and
the second processing unit is configured to, when the drift radio network subsystem activates the uplink 16QAM operation in the radio link, map the absolute grant according to a second absolute grant value mapping relationship table, and process the relative grant signaling according to a second scheduling grant table.

The system further comprises a sending unit at a serving radio network subsystem side configured to send RNSAP layer control signaling to the drift radio network subsystem such that the drift radio network subsystem learns whether to activate the uplink 16QAM operation in the radio link.

The first processing unit further comprises a first absolute grant sending module and a first relative grant sending module; wherein
the first absolute grant sending module is configured to, when the drift radio network subsystem maps the absolute grant according to the first absolute grant value mapping relationship table, search the first absolute grant value mapping relationship table for an index number corresponding to an absolute grant value, and send absolute grant signaling corresponding to the acquired index number to a terminal to indicate the maximum uplink resources available to the terminal;
the first relative grant sending module is configured to, when the drift radio network subsystem processes the relative grant signaling according to the first scheduling grant table, send serving relative grant signaling and non-serving relative grant signaling according to the first scheduling grant table.

The second processing unit further comprises a second absolute grant sending module and a second relative grant sending module; wherein
the second absolute grant sending module is configured to, when the drift radio network subsystem maps the absolute grant according to the second absolute grant value mapping relationship table, search the second absolute grant value mapping relationship table for an index number corresponding to an absolute grant value, and send absolute grant signaling corresponding to the acquired index number to the terminal to indicate the maximum uplink resources available to the terminal;
the second relative grant sending module is configured to, when the drift radio network subsystem processes the relative grant signaling according to the second scheduling grant table, send the serving relative grant signaling and non-serving relative grant signaling according to the second scheduling grant table.

In the present invention, when the drift radio network subsystem does not activate the uplink 16QAM operation in the radio link, the drift radio network subsystem maps the absolute grant according to the first absolute grant value mapping relationship table, and processes the relative grant signaling according to the first scheduling grant table; when the drift radio network subsystem activates the uplink 16QAM operation in the radio link, the drift radio network subsystem maps the absolute grant according to the second absolute grant value mapping relationship table, and processes the relative grant signaling according to the second scheduling grant table.

With the present invention, the relative grant signaling and absolute grant signaling are processed based on correlation between the relative grant and absolute grant.

### Brief Description of Drawings

FIG. 1 is a flow chart of a processing method according to the first embodiment of the present invention.
FIG. 2 is a flow chart of a processing method according to the second embodiment of the present invention.
FIG. 3 is a flow chart of a processing method according to the third embodiment of the present invention.

### Preferred Embodiments of the Present Invention

The basic idea of the present invention is that when a drift radio network subsystem does not activate an uplink 16 Quadrature Amplitude Modulation (16QAM) operation in a radio link, the drift radio network subsystem maps absolute grant according to a first absolute grant value mapping relationship table, and processes relative grant signaling according to a first scheduling grant table; and when the drift radio network subsystem activates the uplink 16QAM operation in the radio link, the drift radio network subsystem maps the absolute grant according to a second absolute grant value mapping relationship table, and processes the relative grant signaling according to a second scheduling grant table.

The implementation of the technical scheme will be further described in detail below in conjunction with the accompanying drawings.

A method for determining relative grant and absolute grant mapping mainly includes the following contents.

When a drift radio network subsystem does not activate an uplink 16QAM operation in a radio link, the drift radio network subsystem maps absolute grant according to a first absolute grant value mapping relationship table, e.g., the above Table 1 (absolute grant value mapping relationship table one), and processes relative grant signaling according to a first scheduling grant table, e.g., the above Table 3 (scheduling grant table one); and when the drift radio network subsystem activates the uplink 16QAM operation in the radio link, the drift radio network subsystem maps the absolute grant according to a second absolute grant value mapping relationship table, e.g., the above Table 2 (absolute grant value mapping relationship table two), and processes the relative grant signaling according to a second scheduling grant table, e.g., the above Table 4 (scheduling grant table two).

Furthermore, a serving radio network subsystem sends RNSAP layer control signaling to the drift radio network subsystem to indicate whether the drift radio network subsystem activates the uplink 16QAM operation in the radio link.

Furthermore, for the indication in the RNSAP layer control signaling, when the RNSAP layer control signaling carries an uplink 16QAM operation indication information element and the value of the uplink 16QAM operation indication information element is set to be activated, the drift radio network subsystem activates the uplink 16QAM operation in the radio link; when the RNSAP layer control signaling carries the uplink 16QAM operation indication information element and the value of the uplink 16QAM operation indication information element is set to be non-activated, the drift radio network subsystem does not activate the uplink 16QAM operation in the radio link; and when the RNSAP layer control signaling does not carry the uplink 16QAM operation indication information element, the drift radio network subsystem does not activate the uplink 16QAM operation in the radio link.

Furthermore, the drift radio network subsystem mapping the absolute grant according to the first absolute grant value mapping relationship table, e.g., the above Table 1 (absolute grant value mapping relationship table one) comprises: the drift radio network subsystem using the first absolute grant value mapping relationship table, e.g., the above Table 1 (absolute grant value mapping relationship table one) to find an index number corresponding to an absolute grant value in the table. The drift radio network subsystem sends the absolute grant of the index number to a terminal to indicate the maximum uplink resources available to the terminal, i.e., the maximum E-DPDCH/DPCCH power ratio used in transmitting data in an activated HARQ process.

Furthermore, the drift radio network subsystem mapping the absolute grant according to the second absolute grant value mapping relationship table, e.g., the above Table 2 (absolute grant value mapping relationship table two) comprises: the drift radio network subsystem using the second absolute grant value mapping relationship table, e.g., the above Table 2 (absolute grant value mapping relationship table two) to find an index number corresponding to an absolute grant value in the table. The drift radio network subsystem sends the absolute grant of the index number to the terminal to indicate the maximum uplink resources available to the terminal, i.e., the maximum E-DPDCH/DPCCH power ratio used in transmitting data in an activated HARQ process.

Furthermore, the drift radio network subsystem processing the relative grant signaling according to the first scheduling grant table, e.g., the above Table 3 (scheduling grant table one) comprises: the drift radio network subsystem sending serving relative grant, which specifically includes three values, UP, HOLD and DOWN, according to the first scheduling grant table, e.g., the above Table 3 (scheduling grant table one), and the drift radio network subsystem sending non-serving relative grant, which specifically includes two values, HOLD and DOWN, according to the first scheduling grant table, e.g., the above Table 3 (scheduling grant table one).

Furthermore, the drift radio network subsystem processing the relative grant signaling according to the second scheduling grant table, e.g., the above Table 4 (scheduling grant table two) comprises: the drift radio network subsystem sending serving relative grant, which specifically includes three values, UP, HOLD and DOWN, according to the second scheduling grant table, e.g., the above Table 4 (scheduling grant table two), and the drift radio network subsystem sending non-serving relative grant, which specifically includes two values, HOLD and DOWN, according to the second scheduling grant table, e.g., the above Table 4 (scheduling grant table two).

In conclusion, the difference between the scheme of the present invention and the prior art consists in that there is no correlation between the tables in the prior art, which will result in disadvantages in the prior art during random matching use, and correlation between the tables is established for coordinate use in the scheme of the present invention, obvious technical effects of which will be described below.

The drift radio network subsystem associates the first absolute grant value mapping relationship table, e.g., the above Table 1 (absolute grant value mapping relationship table one) with the first scheduling grant table, e.g., the above Table 3 (scheduling grant table one) for coordinate use, and associates the second absolute grant value mapping relationship table, e.g., the above Table 2 (absolute grant value mapping relationship table two) with the first scheduling grant table, e.g., the above Table 4 (scheduling grant table two) for coordinate use, such that the drift radio network subsystem can schedule and control the power ratio available to the terminal accurately, thereby solving the performance problems found during the engineering applications described above, and improving the performance of the HSUPA technology in the engineering applications.

The present invention will be described below in conjunction with embodiments.

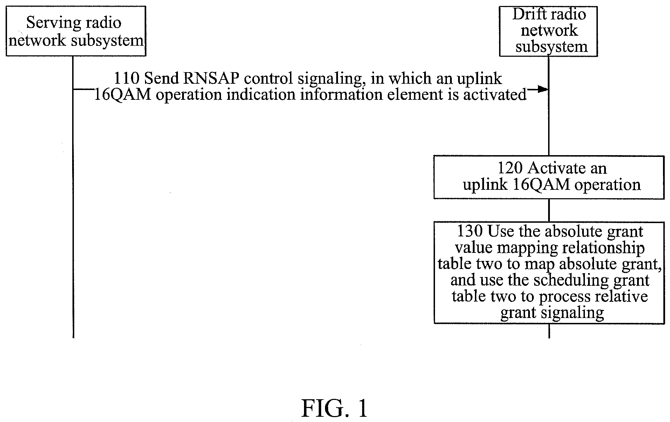

The first embodiment
As shown in FIG. 1, the embodiment comprises the following steps.

In step 110, a serving radio network subsystem sends RNSAP layer control signaling to a drift radio network subsystem.

Here, the RNSAP layer control signaling carries an uplink 16QAM operation indication information element, a value of which is set to be activated.

In step 120, when the drift radio network subsystem analyzes the RNSAP layer control signaling to learn that the RNSAP layer control signaling carries the uplink 16QAM operation indication information element, the value of which is set to be activated, the drift radio network subsystem activates an uplink 16QAM operation in a radio link.

In step 130, the drift radio network subsystem uses the absolute grant value mapping relationship table two to map absolute grant, and uses the scheduling grant table two to process relative grant signaling.

Here, the drift radio network subsystem using the absolute grant value mapping relationship table two to map the absolute grant comprises: the drift radio network subsystem using the absolute grant value mapping relationship table two to find an index number corresponding to an absolute grant value in the table. The drift radio network subsystem sends the absolute grant of the index number to a terminal to indicate the maximum uplink resources available to the terminal, i.e., the maximum E-DPDCH/DPCCH power ratio used in transmitting data in an activated HARQ process.

Here, the drift radio network subsystem using the scheduling grant table two to process the relative grant signaling comprises: the drift radio network subsystem sending serving relative grant, which specifically includes three values, UP, HOLD and DOWN, according to the scheduling grant table two, and the drift radio network subsystem sending non-serving relative grant, which specifically includes two values, HOLD and DOWN, according to the scheduling grant table two.

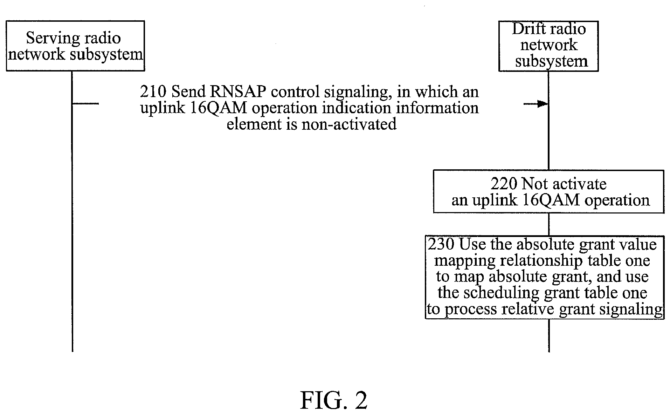

The second embodiment
As shown in FIG. 2, the embodiment comprises the following steps.

In step 210, a serving radio network subsystem sends RNSAP layer control signaling to a drift radio network subsystem.

Here, the RNSAP layer control signaling carries an uplink 16QAM operation indication information element, a value of which is set to be non-activated.

In step 220, when the drift radio network subsystem analyzes the RNSAP layer control signaling to learn that the RNSAP layer control signaling carries the uplink 16QAM operation indication information element, the value of which is set to be non-activated, the drift radio network subsystem does not activate an uplink 16QAM operation in a radio link.

In step 230, the drift radio network subsystem uses the absolute grant value mapping relationship table one to map absolute grant, and uses the scheduling grant table one to process relative grant signaling.

Here, the drift radio network subsystem using the absolute grant value mapping relationship table one to map the absolute grant comprises: the drift radio network subsystem using the absolute grant value mapping relationship table one to find an index number corresponding to an absolute grant value in the table. The drift radio network subsystem sends the absolute grant of the index number to a terminal to indicate the maximum uplink resources available to the terminal, i.e., the maximum E-DPDCH/DPCCH power ratio used in transmitting data in an activated HARQ process.

Here, the drift radio network subsystem using the scheduling grant table one to process the relative grant signaling comprises: the drift radio network subsystem sending serving relative grant, which specifically includes three values, UP, HOLD and DOWN, according to the scheduling grant table one, and the drift radio network subsystem sending non-serving relative grant, which specifically includes two values, HOLD and DOWN, according to the scheduling grant table one.

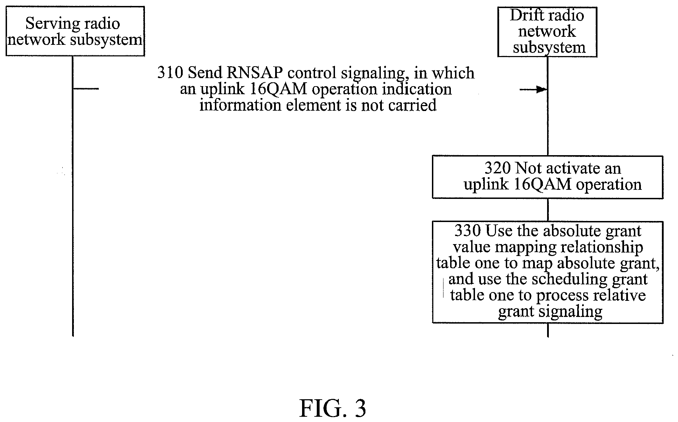

The third embodiment
As shown in FIG. 3, the embodiment comprises the following steps.

In step 310, a serving radio network subsystem sends RNSAP layer control signaling to a drift radio network subsystem.

Here, the RNSAP layer control signaling does not carry an uplink 16QAM operation indication information element.

In step 320, when the drift radio network subsystem analyzes the RNSAP layer control signaling to learn that the RNSAP layer control signaling does not carry the uplink 16QAM operation indication information element, the drift radio network subsystem does not activate an uplink 16QAM operation in a radio link.

In step 330, the drift radio network subsystem uses the absolute grant value mapping relationship table one to map absolute grant, and uses the scheduling grant table one to process relative grant signaling.

Here, the drift radio network subsystem using the absolute grant value mapping relationship table one to map the absolute grant comprises: the drift radio network subsystem using the absolute grant value mapping relationship table one to find an index number corresponding to an absolute grant value in the table. The drift radio network subsystem sends the absolute grant of the index number to a terminal to indicate the maximum uplink resources available to the terminal, i.e., the maximum E-DPDCH/DPCCH power ratio used in transmitting data in an activated HARQ process.

Here, the drift radio network subsystem using the scheduling grant table one to process the relative grant signaling comprises: the drift radio network subsystem sending serving relative grant, which specifically includes three values, UP, HOLD and DOWN, according to the scheduling grant table one, and the drift radio network subsystem sending non-serving relative grant, which specifically includes two values, HOLD and DOWN, according to the scheduling grant table one.

A system for determining relative grant and absolute grant mapping comprises a first processing unit at a drift radio network subsystem side and a second processing unit at the drift radio network subsystem side. The first processing unit is configured to, when a drift radio network subsystem does not activate an uplink 16QAM operation in a radio link, map absolute grant according to a first absolute grant value mapping relationship table, and process relative grant signaling according to a first scheduling grant table. The second processing unit is configured to, when the drift radio network subsystem activates the uplink 16QAM operation in the radio link, map the absolute grant according to a second absolute grant value mapping relationship table, and process the relative grant signaling according to a second scheduling grant table.

Here, the system further comprises a sending unit at a serving radio network subsystem side configured to send RNSAP layer control signaling to the drift radio network subsystem such that the drift radio network subsystem learns whether to activate the uplink 16QAM operation in the radio link.

The first processing unit further comprises a first absolute grant sending module and a first relative grant sending module. The first absolute grant sending module is configured to, when the drift radio network subsystem maps the absolute grant according to the first absolute grant value mapping relationship table, search the first absolute grant value mapping relationship table for an index number corresponding to an absolute grant value, and send absolute grant signaling corresponding to the acquired index number to a terminal to indicate the maximum uplink resources available to the terminal. The first relative grant sending module is configured to, when the drift radio network subsystem processes the relative grant signaling according to the first scheduling grant table, send serving relative grant signaling and non-serving relative grant signaling according to the first scheduling grant table.

Here, the second processing unit further comprises a second absolute grant sending module and a second relative grant sending module. The second absolute grant sending module is configured to, when the drift radio network subsystem maps the absolute grant according to the second absolute grant value mapping relationship table, search the second absolute grant value mapping relationship table for an index number corresponding to an absolute grant value, and send absolute grant signaling corresponding to the acquired index number to the terminal to indicate the maximum uplink resources available to the terminal. The second relative grant sending module is configured to, when the drift radio network subsystem processes the relative grant signaling according to the second scheduling grant table, send the serving relative grant signaling and non-serving relative grant signaling according to the second scheduling grant table.

The above description is only the preferred embodiments of the present invention and is not intended to limit the present invention.

### Industrial Applicability

In the present invention, when the drift radio network subsystem does not activate the uplink 16QAM operation in the radio link, the drift radio network subsystem maps the absolute grant according to the first absolute grant value mapping relationship table, and processes the relative grant signaling according to the first scheduling grant table; and when the drift radio network subsystem activates the uplink 16QAM operation in the radio link, the drift radio network subsystem maps the absolute grant according to the second absolute grant value mapping relationship table, and processes the relative grant signaling according to the second scheduling grant table. Therefore, the relative grant signaling and absolute grant signaling can be processed based on correlation between the relative grant and absolute grant.

## Claims

1. A method for determining relative grant and absolute grant mapping, **characterized by** comprising:
when a drift radio network subsystem does not activate an uplink 16 Quadrature Amplitude Modulation, 16QAM, operation in a radio link (220, 320), the drift radio network subsystem mapping absolute grant according to a first absolute grant value mapping relationship table, and processing relative grant signaling according to a first scheduling grant table (230, 330); and
when the drift radio network subsystem activates the uplink 16QAM operation in the radio link (120), the drift radio network subsystem mapping the absolute grant according to a second absolute grant value mapping relationship table, and processing the relative grant signaling according to a second scheduling grant table (130);
wherein:
the drift radio network subsystem mapping the absolute grant according to the first absolute grant value mapping relationship table comprises: the drift radio network subsystem searching the first absolute grant value mapping relationship table for an index number corresponding to an absolute grant value; and the drift radio network subsystem sending absolute grant signaling corresponding to the acquired index number to a terminal to indicate the maximum uplink resources available to the terminal; and
the drift radio network subsystem processing the relative grant signaling according to the first scheduling grant table comprises: the drift radio network subsystem sending serving relative grant signaling and non-serving relative grant signaling according to the first scheduling grant table;
the drift radio network subsystem mapping the absolute grant according to the second absolute grant value mapping relationship table comprises: the drift radio network subsystem searching the second absolute grant value mapping relationship table for an index number corresponding to an absolute grant value; and the drift radio network subsystem sending absolute grant signaling corresponding to the acquired index number to the terminal to indicate the maximum uplink resources available to the terminal; and
the drift radio network subsystem processing the relative grant signaling according to the second scheduling grant table comprises: the drift radio network subsystem sending the serving relative grant signaling and non-serving relative grant signaling according to the second scheduling grant table.

2. The method according to claim 1, further comprising: a serving radio network subsystem sending Radio Network Subsystem Application Part, RNSAP, layer control signaling to the drift radio network subsystem such that the drift radio network subsystem learns whether to activate the uplink 16QAM operation in the radio link (110).

3. The method according to claim 2, wherein when the RNSAP layer control signaling carries an uplink 16QAM operation indication information element and a value of the uplink 16QAM operation indication information element is set to be activated (110), the drift radio network subsystem learns to activate the uplink 16QAM operation in the radio link (120);
when the RNSAP layer control signaling carries the uplink 16QAM operation indication information element, and the value of the uplink 16QAM operation indication information element is set to be non-activated (210), the drift radio network subsystem learns not to activate the uplink 16QAM operation in the radio link (220); and
when the RNSAP layer control signaling does not carry the uplink 16QAM operation indication information element (310), the drift radio network subsystem learns not to activate the uplink 16QAM operation in the radio link (320).

4. A system for determining relative grant and absolute grant mapping, **characterized by** comprising a first processing unit at a drift radio network subsystem side and a second processing unit at the drift radio network subsystem side; wherein
the first processing unit is configured to, when a drift radio network subsystem does not activate an uplink 16QAM operation in a radio link, map absolute grant according to a first absolute grant value mapping relationship table, and process relative grant signaling according to a first scheduling grant table; and
the second processing unit is configured to, when the drift radio network subsystem activates the uplink 16QAM operation in the radio link, map the absolute grant according to a second absolute grant value mapping relationship table, and process the relative grant signaling according to a second scheduling grant table;
wherein:
the first processing unit further comprises a first absolute grant sending module and a first relative grant sending module; wherein
the first absolute grant sending module is configured to, when the drift radio network subsystem maps the absolute grant according to the first absolute grant value mapping relationship table, search the first absolute grant value mapping relationship table for an index number corresponding to an absolute grant value, and send absolute grant signaling corresponding to the acquired index number to a terminal to indicate the maximum uplink resources available to the terminal; and
the first relative grant sending module is configured to, when the drift radio network subsystem processes the relative grant signaling according to the first scheduling grant table, send serving relative grant signaling and non-serving relative grant signaling according to the first scheduling grant table;
the second processing unit further comprises a second absolute grant sending module and a second relative grant sending module; wherein
the second absolute grant sending module is configured to, when the drift radio network subsystem maps the absolute grant according to the second absolute grant value mapping relationship table, search the second absolute grant value mapping relationship table for an index number corresponding to an absolute grant value, and send absolute grant signaling corresponding to the acquired index number to the terminal to indicate the maximum uplink resources available to the terminal; and
the second relative grant sending module is configured to, when the drift radio network subsystem processes the relative grant signaling according to the second scheduling grant table, send the serving relative grant signaling and non-serving relative grant signaling according to the second scheduling grant table.

5. The system according to claim 4, further comprising a sending unit at a serving radio network subsystem side configured to send RNSAP layer control signaling to the drift radio network subsystem such that the drift radio network subsystem learns whether to activate the uplink 16QAM operation in the radio link.

## Patentansprüche

1. Verfahren zum Bestimmen von relativem und absolutem Zuordnungs-Mapping, **dadurch gekennzeichnet, dass** es Folgendes beinhaltet:
Mappen, wenn ein Drift-Funknetzsubsystem keinen Uplink-16-QAM-(16 Quadrature Amplitude Modulation)-Betrieb in einer Funkverbindung (220, 320) aktiviert, einer absoluten Zuordnung durch das Drift-Funknetzsubsystem gemäß einer Absolutzuordnungswert-Mapping-Beziehungstabelle, und Verarbeiten von Relativzuordnungssignalisierung gemäß einer ersten Planungszuordnungstabelle (230, 330); und
Mappen, wenn das Drift-Funknetzsubsystem den Uplink-16QAM-Betrieb in der Funkverbindung (120) aktiviert, der absoluten Zuordnung durch das Drift-Funknetzsubsystem gemäß einer zweiten Absolutzuordnungswert-Mapping-Zuordnungstabelle, und Verarbeiten der Relativzuordnungssignalisierung gemäß einer zweiten Planungszuordnungstabelle (130);
wobei:
das Mappen der absoluten Zuordnung gemäß der ersten Absolutzuordnungswert-Mapping-Beziehungstabelle durch das Drift-Funknetzsubsystem Folgendes beinhaltet: Durchsuchen, durch das Drift-Funknetzsubsystem, der ersten Absolutzuordnungswert-Mapping-Beziehungstabelle nach einer Indexnummer entsprechend einem Absolutzuordnungswert; und Senden, durch das Drift-Funknetzsubsystem, von Absolutzuordnungssignalisierung gemäß der erfassten Indexnummer zu einem Endgerät, um die dem Endgerät zur Verfügung stehenden maximalen Uplink-Ressourcen anzuzeigen; und
das Verarbeiten der Relativzuordnungssignalisierung durch das Drift-Funknetzsubsystem gemäß der ersten Planungszuordnungstabelle Folgendes beinhaltet: Senden, durch das Drift-Funknetzsubsystem, einer bedienenden Relativzuordnungssignalisierung und einer nicht bedienenden Relativzuordnungssignalisierung gemäß der ersten Planungszuordnungstabelle;
das Mappen, durch das Drift-Funknetzsubsystem, der absoluten Zuordnung gemäß der zweiten Absolutzuordnungswert-Mapping-Beziehungstabelle Folgendes beinhaltet: Durchsuchen, durch das Drift-Funknetzsubsystem, der zweiten Absolutzuordnungswert-Mapping-Beziehungstabelle nach einer Indexnummer entsprechend einem Absolutzuordnungswert; und Senden, durch das Drift-Funknetzsubsystem, von Absolutzuordnungssignalisierung entsprechend der erfassten Indexnummer zu dem Endgerät, um die dem Endgerät zur Verfügung stehenden maximalen Uplink-Ressourcen anzuzeigen; und
wobei das Verarbeiten, durch das Drift-Funknetzsubsystem, der Relativzuordnungssignalisierung gemäß der zweiten Planungszuordnungstabelle Folgendes beinhaltet: Senden, durch das Drift-Funknetzsubsystem, der bedienenden Relativzuordnungssignalisierung und der nicht bedienenden Relativzuordnungssignalisierung gemäß der zweiten Planungszuordnungstabelle.

2. Verfahren nach Anspruch 1, das ferner Folgendes beinhaltet: Senden, durch ein bedienendes Funknetzsubsystem, von RNSAP-(Radio Network Subsystem Application Part)-Schichtsteuersignalisierung zu dem Drift-Funknetzsubsystem, so dass das Drift-Funknetzsubsystem lernt, ob der Uplink-16QAM-Betrieb in der Funkverbindung (110) zu aktivieren ist.

3. Verfahren nach Anspruch 2, wobei, wenn die RNSAP-Schichtsteuersignalisierung ein Uplink-16QAM-Betriebsanzeigeinformationselement führt und ein Wert des Uplink-16QAM-Betriebsanzeigeinformationselements auf Aktivierung (110) gesetzt ist, das Drift-Funknetzsubsystem lernt, den Uplink-16QAM-Betrieb in der Funkverbindung (120) zu aktivieren;
wenn die RNSAP-Schichtsteuersignalisierung das Uplink-16QAM-Betriebsanzeigeinformationselement führt und der Wert des Uplink-16QAM-Betriebsanzeigeinformationselements auf Nichtaktivierung (210) gesetzt ist, das Drift-Funknetzsubsystem lernt, den Uplink-16QAM-Betrieb in der Funkverbindung (220) nicht zu aktivieren; und
wenn die RNSAP-Schichtsteuersignalisierung das Uplink-16QAM-Betriebsanzeigeinformationselement (310) nicht führt, das Drift-Funknetzsubsystem lernt, den Uplink-16QAM-Betrieb in der Funkverbindung (320) nicht zu aktivieren.

4. System zum Bestimmen von relativem und absolutem Zuordnungs-Mapping, **dadurch gekennzeichnet, dass** es eine erste Verarbeitungseinheit auf der Seite eines Drift-Funknetzsubsystems und eine zweite Verarbeitungseinheit auf der Seite des Drift-Funknetzsubsystems umfasst; wobei
die erste Verarbeitungseinheit konfiguriert ist zum Mappen, wenn ein Drift-Funknetzsubsystem keinen Uplink-16QAM-Betrieb in einer Funkverbindung aktiviert, von absoluter Zuordnung gemäß einer ersten Absolutzuordnungswert-Mapping-Beziehungstabelle, und zum Verarbeiten von Relativzuordnungssignalisierung gemäß einer ersten Planungszuordnungstabelle; und
die zweite Verarbeitungseinheit konfiguriert ist zum Mappen, wenn das Drift-Funknetzsubsystem den Uplink-16QAM-Betrieb in der Funkverbindung aktiviert, der absoluten Zuordnung gemäß einer zweiten Absolutzuordnungswert-Mapping-Beziehungstabelle, und zum Verarbeiten der Relativzuordnungssignalisierung gemäß einer zweiten Planungszuordnungstabelle;
wobei:
die erste Verarbeitungseinheit ferner ein erstes Absolutzuordnungssendemodul und ein erstes Relativzuordnungssendemodul umfasst; wobei
das erste Absolutzuordnungssendemodul konfiguriert ist zum Durchsuchen, wenn das Drift-Funknetzsubsystem die absolute Zuordnung gemäß der ersten Absolutzuordnungswert-Mapping-Beziehungstabelle mappt, der ersten Absolutzuordnungswert-Mapping-Beziehungstabelle nach einer Indexnummer entsprechend einem Absolutzuordnungswert, und zum Senden von Absolutzuordnungssignalisierung entsprechend der erfassten Indexnummer zu einem Endgerät, um die dem Endgerät zur Verfügung stehenden maximalen Uplink-Ressourcen anzuzeigen; und
das erste Relativzuordnungssendemodul konfiguriert ist zum Senden, wenn das Drift-Funknetzsubsystem die Relativzuordnungssignalisierung gemäß der ersten Planungszuordnungstabelle verarbeitet, von bedienender Relativzuordnungssignalisierung und von nicht bedienender Relativzuordnungssignalisierung gemäß der ersten Planungszuordnungstabelle;
die zweite Verarbeitungseinheit ferner ein zweites Absolutzuordnungssendemodul und ein zweites Relativzuordnungssendemodul umfasst; wobei
das zweite Absolutzuordnungssendemodul konfiguriert ist zum Durchsuchen, wenn das Drift-Funknetzsubsystem die absolute Zuordnung gemäß der zweiten Absolutzuordnungswert-Mapping-Beziehungstabelle mappt, der zweiten Absolutzuordnungswert-Mapping-Beziehungstabelle nach einer Indexnummer entsprechend einem Absolutzuordnungswert, und zum Senden von Absolutzuordnungssignalisierung entsprechend der erfassten Indexnummer zu dem Endgerät, um die dem Endgerät zur Verfügung stehenden maximalen Uplink-Ressourcen anzuzeigen; und
das zweite Relativzuordnungssendemodul konfiguriert ist zum Senden, wenn das Drift-Funknetzsubsystem die Relativzuordnungssignalisierung gemäß der zweiten Planungszuordnungtabelle verarbeitet, der bedienenden Relativzuordnungssignalisierung und der nicht bedienenden Relativzuordnungssignalisierung gemäß der zweiten Planungszuordnungstabelle.

5. System nach Anspruch 4, das ferner eine Sendeeinheit auf der Seite eines bedienenden Funknetzsubsystems umfasst, konfiguriert zum Senden von RNSAP-Schichtsteuersignalisierung zu dem Drift-Funknetzsubsystem, so dass das Drift-Funknetzsubsystem lernt, ob der Uplink-16QAM-Betrieb in der Funkverbindung zu aktivieren ist.

## Revendications

1. Procédé de détermination de mappage d'attribution relative et d'attribution absolue, **caractérisé en ce qu'**il comprend :
quand un sous-système de réseau radio déphasé n'active pas une opération de modulation d'amplitude en quadrature à 16 états, 16QAM, de liaison montante, dans une liaison radio (220, 320), par le sous-système de réseau radio déphasé le mappage d'une attribution absolue conformément à une première table de relations de mappage de valeurs d'attribution absolue, et le traitement d'une signalisation d'attribution relative conformément à une première table d'attribution d'ordonnancement (230, 330) ; et
quand le sous-système de réseau radio déphasé active l'opération 16QAM de liaison montante dans la liaison radio (120), par le sous-système de réseau radio déphasé le mappage de l'attribution absolue conformément à une seconde table de relations de mappage de valeurs d'attribution absolue, et le traitement de la signalisation d'attribution relative conformément à une seconde table d'attribution d'ordonnancement (130) ;
dans lequel :
le mappage par le sous-système de réseau radio déphasé de l'attribution absolue conformément à la première table de relations de mappage de valeurs d'attribution absolue comprend : la recherche par le sous-système de réseau radio déphasé dans la première table de relations de mappage de valeurs d'attribution absolue d'un nombre indice correspondant à une valeur d'attribution absolue ; et l'envoi par le sous-système de réseau radio déphasé d'une signalisation d'attribution absolue correspondant au nombre indice acquis à un terminal pour indiquer les ressources de liaison montante maximales à la disposition du terminal ; et
le traitement par le sous-système de réseau radio déphasé de la signalisation d'attribution relative conformément à la première table d'attribution d'ordonnancement comprend : l'envoi par le sous-système de réseau radio déphasé d'une signalisation d'attribution relative de desserte et d'une signalisation d'attribution relative non de desserte conformément à la première table d'attribution d''ordonnancement ;
le mappage par le sous-système de réseau radio déphasé de l'attribution absolue conformément à la seconde table de relations de mappage de valeurs d'attribution absolue comprend : la recherche par le sous-système de réseau radio déphasé dans la seconde table de relations de mappage de valeurs d'attribution absolue d'un nombre indice correspondant à une valeur d'attribution absolue ; et l'envoi par le sous-système de réseau radio déphasé d'une signalisation d'attribution absolue correspondant au nombre indice acquis au terminal pour indiquer les ressources de liaison montante maximales à la disposition du terminal ; et
le traitement par le sous-système de réseau radio déphasé de la signalisation d'attribution relative conformément à la seconde table d'attribution d'ordonnancement comprend : l'envoi par le sous-système de réseau radio déphasé de la signalisation d'attribution relative de desserte et de la signalisation d'attribution relative non de desserte conformément à la seconde table d'attribution d'ordonnancement.

2. Procédé selon la revendication 1, comprenant en outre : l'envoi par un sous-système de réseau radio de desserte d'une signalisation de commande de couche RNSAP (Radio Network Subsystem Application Part - partie d'application de sous-système de réseau radio) au sous-système de réseau radio déphasé de telle sorte que le sous-système de réseau radio déphasé apprenne qu'il convient ou non d'activer l'opération 16QAM de liaison montante dans la liaison radio (110).

3. Procédé selon la revendication 2, dans lequel quand la signalisation de commande de couche RNSAP comporte un élément d'information d'indication d'opération 16QAM de liaison montante et une valeur de l'élément d'information d'indication d'opération 16QAM de liaison montante est réglée pour être activée (110), le sous-système de réseau radio déphasé apprend qu'il convient d'activer l'opération 16QAM de liaison montante dans la liaison radio (120) ;
quand la signalisation de commande de couche RNSAP comporte l'élément d'information d'indication d'opération 16QAM de liaison montante, et la valeur de l'élément d'information d'indication d'opération 16QAM de liaison montante est réglée pour être non activée (210), le sous-système de réseau radio déphasé apprend qu'il convient de ne pas activer l'opération 16QAM de liaison montante dans la liaison radio (220) ; et
quand la signalisation de commande de couche RNSAP ne comporte pas l'élément d'information d'indication d'opération 16QAM de liaison montante (310), le sous-système de réseau radio déphasé apprend qu'il convient de ne pas activer l'opération 16QAM de liaison montante dans la liaison radio (320) .

4. Système de détermination de mappage d'attribution relative et d'attribution absolue, **caractérisé en ce qu'**il comprend une première unité de traitement du côté d'un sous-système de réseau radio déphasé et une seconde unité de traitement du côté du sous-système de réseau radio déphasé ; dans lequel
la première unité de traitement est configurée pour, quand un sous-système de réseau radio déphasé n'active pas une opération 16QAM de liaison montante dans une liaison radio, mapper une attribution absolue conformément à une première table de relations de mappage de valeurs d'attribution absolue, et traiter une signalisation d'attribution relative conformément à une première table d'attribution d'ordonnancement ; et
la seconde unité de traitement est configurée pour, quand le sous-système de réseau radio déphasé active l'opération 16QAM de liaison montante dans la liaison radio, mapper l'attribution absolue conformément à une seconde table de relations de mappage de valeurs d'attribution absolue, et traiter la signalisation d'attribution relative conformément à une seconde table d'attribution d'ordonnancement ;
dans lequel :
la première unité de traitement comprend en outre un premier module d'envoi d'attribution absolue et un premier module d'envoi d'attribution relative ; dans lequel
le premier module d'envoi d'attribution absolue est configuré pour, quand le sous-système de réseau radio déphasé mappe l'attribution absolue conformément à la première table de relations de mappage de valeurs d'attribution absolue, rechercher dans la première table de relations de mappage de valeurs d'attribution absolue un nombre indice correspondant à une valeur d'attribution absolue, et envoyer une signalisation d'attribution absolue correspondant au nombre indice acquis à un terminal pour indiquer les ressources de liaison montante maximales à la disposition du terminal ; et
le premier module d'envoi d'attribution relative est configuré pour, quand le sous-système de réseau radio déphasé traite la signalisation d'attribution relative conformément à la première table d'attribution d'ordonnancement, envoyer une signalisation d'attribution relative de desserte et une signalisation d'attribution relative non de desserte conformément à la première table d'attribution d''ordonnancement ;
la seconde unité de traitement comprend en outre un second module d'envoi d'attribution absolue et un second module d'envoi d'attribution relative ; dans lequel
le second module d'envoi d'attribution absolue est configuré pour, quand le sous-système de réseau radio déphasé mappe l'attribution absolue conformément à la seconde table de relations de mappage de valeurs d'attribution absolue, rechercher dans la seconde table de relations de mappage de valeurs d'attribution absolue un nombre indice correspondant à une valeur d'attribution absolue, et envoyer une signalisation d'attribution absolue correspondant au nombre indice acquis au terminal pour indiquer les ressources de liaison montante maximales à la disposition du terminal ; et
le second module d'envoi d'attribution relative est configuré pour, quand le sous-système de réseau radio déphasé traite la signalisation d'attribution relative conformément à la seconde table d'attribution d'ordonnancement, envoyer la signalisation d'attribution relative de desserte et la signalisation d'attribution relative non de desserte conformément à la seconde table d'attribution d'ordonnancement.

5. Système selon la revendication 4, comprenant en outre une unité d'envoi du côté d'un sous-système de réseau radio de desserte configurée pour envoyer une signalisation de commande de couche RNSAP au sous-système de réseau radio déphasé de telle sorte que le sous-système de réseau radio déphasé apprenne qu'il convient ou non d'activer l'opération 16QAM de liaison montante dans la liaison radio.
